# EUROPEAN PATENT APPLICATION

(11) **EP 3 920 081 A1**
(43) Date of publication of application: **08.12.2021**
(21) Application number: 20178276.0
(22) Date of filing: 04.06.2020
(51) Int. Cl.: G06K 9/00

(54) **VIDEO PROCESSING SYSTEM**

(71) Applicant: Koninklijke Philips N.V., 5656 AG Eindhoven (NL)
(72) Inventor: GEURTS, Lucas Jacobus Franciscus, 5656 AE Eindhoven (NL); TALGORN, Elise Claude Valentine, 5656 AE Eindhoven (NL); VAREKAMP, Christiaan, 5656 AE Eindhoven (NL)
(74) Representative: Philips Intellectual Property & Standards

(57) **Abstract**

Some embodiments are directed to a video processing system. The system may be configured to apply a video classifier to a first video stream to obtain a classifier result, apply an applicable video processing rule set to at least the classifier result to obtain a video processing operation, and to apply the obtained video processing operation to the one or more first video streams.

## Description

### FIELD OF THE INVENTION

The presently disclosed subject matter relates to a video processing system, a video processing method, a transitory or non-transitory computer readable medium.

### BACKGROUND OF THE INVENTION

It is known to obtain video from professionals as they work. For example, a video stream may be obtained from a professional like, e.g., a medical specialist, a law enforcement agent, and the like, as they work, e.g., from a body mountable camera. It is foreseen that this practice will increase in the future.

For example, medical specialists could wear one or multiple wide-angle, e.g., fisheye, cameras. The cameras could be integrated in augmented reality glasses. Such a camera could facilitate tele-presence during operation. For instance, students or coworkers could view and interact with a live video feed that is captured from such a camera setup worn by the specialist.

Video such as these, may, for example, be used for educational purposes, to support the professional in his work, e.g., to offer advice or assistance from a remote location, or for controlling the work of the professional. This also applies to training and services for numerous other industries, e.g., for remotely guided maintenance and installation of equipment in hospitals, factories, hospitality, as well as at home.

Unfortunately, the video streams obtained in this way are not satisfactory. For example, the video streams may be jittery due to the movement of the person wearing the camera. One known video processing technique to counter this is video stabilization. In that case, a high-frequency motion component of the camera is estimated, and the video image is shifted such that the high-frequency component is reduced, resulting in a stable video. For example, US patent 8736692 B1, included herein by reference, discloses a method of stabilizing a video obtained from a body-mountable camera. In one example, the body-mountable camera may capture point-of-view (POV) video. For instance, the video may be captured from a viewpoint of a user to which the body-mountable camera is attached. In the method, gaze-direction data is obtained from one or more head-mountable eye trackers, which is processed to determine gaze-direction data. The video is stabilized based at least in part on the detected gaze-direction data. Still, the video obtained from body mounted cameras and the like may be improved in various ways.

### SUMMARY OF THE INVENTION

It would be advantageous to have an improved video processing system. For example, the video processing system may comprise interfaces for receiving one or more first video streams and transmitting a second video stream. Video processing operations, such as stabilizing, cropping, and switching between different feeds, etc., may be applied to the received streams in an automated fashion. Which video processing operations are to be applied may be determined by a rule-based system. Interestingly, a video classifier may be applied to a received video stream to obtain a classifier result. A rule may associate a video processing operation which is to be applied with a classifier result. Interestingly, the way the received video stream or streams are processed, e.g., edited, can be changed by changing the rule set which is used. Finally, the processed video may be transmitted to a viewer.

In an embodiment, a classifier is configured to discriminate between interesting and non-interesting events, which may be application specific. For example, in an embodiment a behavior may be classified as repetitive, disruptive, or explorative. From that it may be decided whether stabilization is needed or not, etc. Standard video stabilization cannot handle unforeseen and/or unpredictable behavior, e.g., of the person who is wearing a camera. Normal expected movements can be compensated by standard stabilization, but unpredictable events that can happen in the environment where the person reacts cannot be handled by standard video stabilization, e.g., when someone enters the room, or the specialist is moving around or moving his/her head too much due to what he/she is exploring, or the camera goes back and forth due to multiple points of interest. For these and other cases, the video usage from wearable and/or fixed cameras can be improved as in an embodiment. For example, a rule may indicate to which to a wide-angle view when video stabilization cannot handle the head movements of a wearer. For example, context change, e.g., a transition to a next workflow step may cause a different way of video editing, etc.

In an embodiment of the video processing system, the viewer is capable of obtaining more and/or better information from the first video streams since the video has been edited. For example, classifiers may determine behaviors that is visible in a stream and edit the stream so that this is visible in the second video stream. Previously, such editing operations were limited to human editors. As the use of cameras increases however, especially of the body worn variety, the supply of video will exceed the capacity of human editors. The interface between the viewer and the first video streams has thus been improved. Moreover, there is a reduced bandwidth. There is no need to transmit all of the received first video streams to the second viewer. For example, in an embodiment the second video stream, or streams, use less bandwidth than the first video stream. Interestingly, stabilized video streams are also better suited to compression, which may happen in the video processing system or downstream, e.g., between video processing system and viewer.

A behavioral classifier may be configured to identify a behavior in the video stream, e.g., a behavior performed by a person who is at least partly visible in a video stream. The person performing the behavior may or may not be the wearer of a camera. In an embodiment, the behavior of the person wearing the camera is detected. For example, such a detection may be made from movement of the hands of the camera wearing person, but this is not necessary, as classification may be made from other visual features as well. Images of multiple cameras and/or images taken at different time points may be combined by a classifier, e.g., received together on an input, to perform the classification.

If there is a transition between streams and/or scenes, the change can be made less disruptive, by adding a transition effect, e.g., as is known in the art. For example, there may be a setting which can be set by the viewer to include transitions, or define the speed or nature of transitions, e.g., slow/fast, fade in-out, etc.

The video processing system is an electronic system and may be embodied in a single electronic device or in multiple electronic devices. The system and corresponding method may be applied in a wide range of practical applications. Such practical applications include the recording of medical procedures, e.g., surgical operations, teaching environments, law enforcement, security monitoring, workshops, craftwork, and so on. The system may be used by the viewer for education, e.g., learning about the subject that is shown in the first video streams. The system may be used by the viewer to support a person shown in the first video streams; for example, by offering advice or performing remote actions.

A further aspect is a video processing method. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium. Another aspect of the presently disclosed subject matter is a method of making the computer program available for downloading.

### BRIEF DESCRIPTION OF THE DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a video processing system,
Figure 1b schematically shows an example of an embodiment of a video processing system applied in an operating theater,
Figure 1c schematically shows an example of an embodiment of an augmented reality device,
Figure 2a schematically shows an example of an embodiment of a video processing operation,
Figure 2b schematically shows an example of an embodiment of a first video processing operation and a second video processing operation,
Figure 3a schematically shows an example of an embodiment of a video processing rule,
Figure 3b schematically shows an example of an embodiment of a decision tree,
Figure 4a schematically shows an example of an embodiment of a video processing system,
Figure 4b schematically shows an example of an embodiment of a video processing device,
Figure 5 schematically shows an example of an embodiment of a video processing method,
Figure 6a schematically shows a computer readable medium having a writable part comprising a computer program according to an embodiment,
Figure 6b schematically shows a representation of a processor system according to an embodiment.

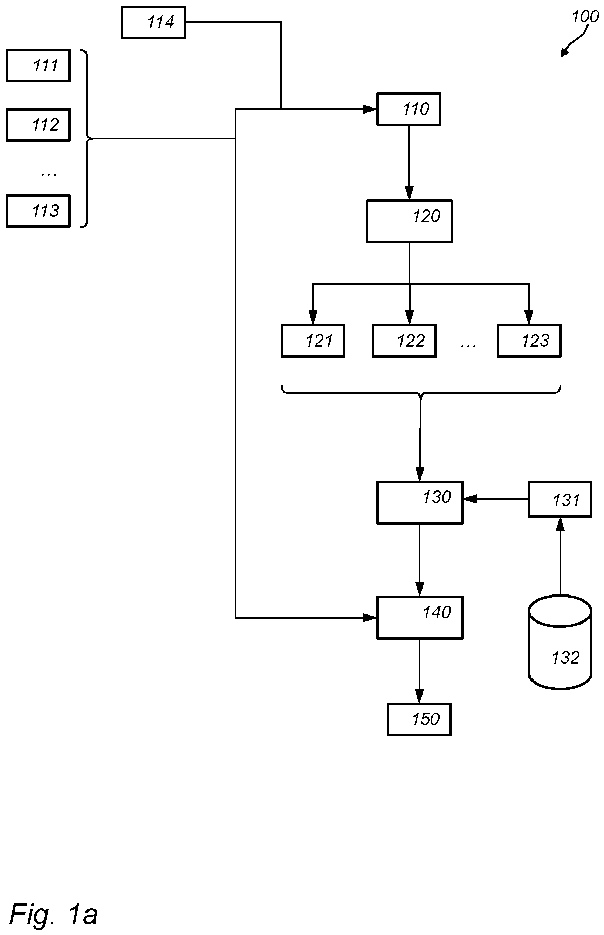

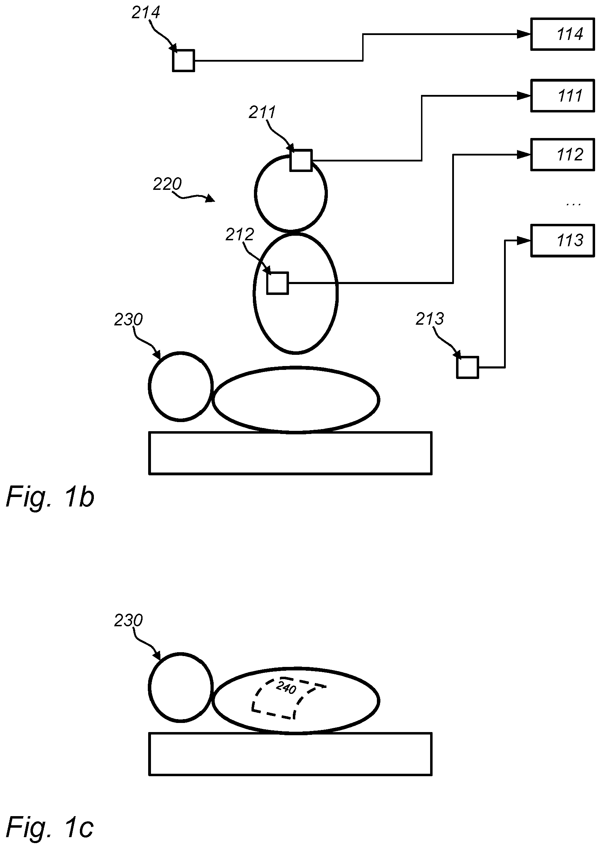

### List of Reference Numerals in figures 1-4b, 6a-6b

The following list of references and abbreviations is provided for facilitating the interpretation of the drawings and shall not be construed as limiting the claims.
- 100: a video processing system
- 110: a first video interface
- 111-113: a video stream
- 114: a further video stream
- 120: a classifier
- 121-123: a classifier result
- 130: a decision unit
- 131: a rule interface
- 132: a video processing rule database
- 140: a video processing unit
- 150: a second video interface
- 211-214: a camera
- 220: a surgeon
- 230: a patient
- 240: an overlay
- 301: a video processing rule
- 310: a rule preamble
- 320: a rule pattern
- 330: video processing parameters
- 340: a decision tree
- 341,342: an if-clause
- 351, 352: a video processing operation
- 360: a video stream
- 361: a region of interest
- 362: a stabilized video stream
- 371: a first region of interest
- 372: a first stabilized video stream
- 373: a second region of interest
- 374: a second stabilized video stream
- 410: a video processing device
- 430: a processor
- 440: a memory
- 450: a communication interface
- 460: a video processing system
- 470: a processor system
- 471: a first video interface
- 472: a second video interface
- 473: a rule interface

- 1000: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them. Further, the subject matter that is presently disclosed is not limited to the embodiments only, but also includes every other combination of features described herein or recited in mutually different dependent claims.

**Figure 1a** schematically shows an example of an embodiment of a video processing system 100. The system comprises a first video interface 110. First video interface 110 is configured for receiving one or more first video streams. Three first video streams are represented in figure 1a as video streams 111-113. There may be fewer, e.g., one or two, or more, e.g., more than three video streams. System 100 is configured to obtain the one or more first video streams through first video interface 110.

The first video streams may be obtained from one or more cameras. For example, one or more cameras may be a body mounted camera, e.g., in a headset, a bodycam, etc. For example, one or more cameras may be mounted cameras, e.g., mounted on a fixed position, e.g., not mounted on a body. For example, in an embodiment, one camera may be a fixed camera and one camera may be body mounted, etc.

A camera may have a wide-angle view, e.g., the camera may cover a view of at least 60°, preferably at least 80°. A camera may also have a much wider view, for example, the camera may cover a view of at least 120°, at least 140°. For example, the camera may have an angle of 120, 140, 170 degrees. For example, a bodycam or headset-cam may have an angle in the range 120°-170°.

The camera may have a rectilinear lens with low perspective distortion. The camera may have a higher perspective distortion; for example, the camera may have a fisheye lens with a high viewing angle. The viewing angle may even be above 180°.

An advantage of having a bigger field of view, e.g., a field beyond what a wearer of the camera sees, is that the areas of interest in the whole scene could be viewed by the remote viewer. This enables a richer experience with multiple virtual camera views, to provide a more complete and comprehensive view /assessment of the situation.

**Figure 1b** schematically shows an example of an application of a video processing system 100 applied in an operating theater. Shown in figure 1b is a patient 230 and a specialist 220, e.g., a surgeon. The surgeon is currently operating on patient 230. For example, disposed in the operating theater may be cameras 211-213 to provide the video streams 111-113. For example, in the example shown in figure 1b, camera 211 may be mounted in a headset worn by the specialist. For example, camera 212 may be body mounted, e.g., as bodycam. For example, camera 213 may be a camera on a fixed position. The multiple cameras may have different views of a subject, in this case the patient and the operation which is being performed on him. Note, also shown in figure 1b is a further camera 214 for providing a further video stream. Further camera 214 may be a fish-eye camera, e.g., a ceiling mounted camera and is further discussed below.

**Figure 1c** schematically shows an example of an embodiment of an augmented reality device. For example, the augmented reality device may be head-mounted, e.g., in a headset. For example, the headset may comprise multiple cameras configured for tracking the movement of the head of the wearer, e.g., specialist 220. The video processing system may be configured compute position tracking data from this first video stream obtained from the augmented reality device, e.g., from the headset. A function of the augmented reality device may be to show an overlay to its wearer, e.g., specialist 220. For example, the video processing system may be configured to generate an overlay image or video for an augmented reality device, the overlay image being aligned based on the position tracking data. Shown in figure 1c is such an overlay 240. Note that overlay 240 may only be visible to specialist 220. For example, the overlay may provide relevant patient information to the surgeon.

Interestingly, the video streams that are obtained from the augmented reality device, and which may be used for the tracking of the head of the wearer may be used as the first video streams mentioned above, e.g., for further viewing by a viewer different from specialist 220. Thus, in this embodiment, cameras may have a dual function: on the one hand to provide tracking data, and on the other hand to provide a video stream for viewing. It is noted, that an augmented reality application, although it combines synergistically, is not needed. For example, in an embodiment, system 100 is not configured for generating an overlay and/or the first video streams are not obtained from an augmented reality device.

In other applications, a specialist may be at a remote location and advising a wearer of the camera. For example, a field service engineer may request remote expert advice, a surgeon may need a second opinion, a customer may repair a device at home under the control of an operator, and so on.

Returning to figure 1a, system 100 may comprise a second video interface 150 configured for transmitting a second video stream. For example, second video interface 150 may be used to transmit one or more second video streams to a viewer. For example, the second video stream may be obtained from the first video stream(s) by applying video processing operations to it, e.g., as set out herein.

System 100 may comprise a classifier 120 configured to apply one or more video classifiers to the one or more first video streams to obtain a classifier result. Shown in figure 1a are classifier results 121-123. The classifier results 121-123 are used by a decision unit 130. The decision unit 130 is configured to decide which video processing operations are to be applied to the one or more first video streams, e.g., to obtain a second video stream. Decision unit 130 has access to rules that associate certain classification results to certain video processing operations. For example, system 100 may comprise a rule interface 131 configured to retrieve one or more rules, e.g., a rule set, from a video processing rule database. Examples of classifiers and rules are set out herein.

System 100 may comprise a video processing unit 140 configured to execute the video processing operations that the decision unit 130 reports to be applicable in this case. For example, video processing unit 140 may be configured to derive the second video stream for interface 150 from the first video streams by applying one or more video processing operations.

A classifier, such as classifier 120 may be configured to apply a function to a video stream to obtain a classification result. For example, a video classifier may be a behavioral classifier configured to identify a behavior of a person in the video stream. For example, the classifier may comprise a neural network or some other machine learning function. For example, the classifier may be configured to detect a surgical operation being performed on a human or animal body.

For example, the classifier may comprise a neural network, e.g., comprising multiple configurable convolutional filters. The neural network may be trained on a training set of images of video clips; part of the training set showing the desired behavior, e.g., the operation and part of which does not show the desired behavior. By applying a learning algorithm, e.g., back-propagation, a machine-learnable classifier, e.g., the neural network, may be configured to distinguish between video, or the images comprised therein, that show the behavior and that do not show the behavior. In the context of a surgical operation, e.g., as in figure 1b, the behavior may be the performing of an operation. However, other types of behaviors are also possible, e.g., interacting with a subject in the case of law enforcement, working on a wooden object in the case of a woodcrafter, counting bills in the case of a security application, and so on. The classification result may be whether or not a corresponding behavior is detected or not. For example, there may be multiple classifiers trained for multiple behaviors. For example, a single classifier may be trained for multiple behaviors. For example, a classification result may comprise parameters that indicate aspects of the detected behavior. For example, the classification result may further comprise the indication that the surgeon is currently suturing.

A classifier may also be trained on the presence or absence of an object of interest; e.g., a scalpel.

For example, a region of interest, e.g., a region for stabilization, may be defined with respect to the moving scalpel when used during operation. The scalpel may be used as an indicator of where the virtual camera, e.g., a crop from a wide-angle camera, should point to. For example, an object, e.g., the scalpel, may be used to define an initial region of interest, e.g., a number of pixels around the object. A further region of interest may be defined with respect to a further object detected in the initial region, which more stable in the video stream, e.g., having a stability over a threshold. For example, the further region may be stabilized with respect to the further object. The further object may be, e.g., a part of the patient, a drape, a fold in the drape, and so on. This two-step approach allows automatic definition of a region of interest, e.g., the further region, which at the same time included an interesting object, e.g., a scalpel, without requiring the object to be fixed in the edited video stream. The second region may be redefined at intervals.

For example, a classifier may detect the presence of a patient regardless of whether an operation is currently being performed on it or not. A classification result may indicate the result of the detection.

For example, in an embodiment, a behavioral classifier may be configured to produce an output, e.g., a classifier result, indicating a detected behavior of multiple predefined behaviors. For example, the output of the behavioral classifier may comprise a vector, each element of the vector corresponding to a predefined behavior. For example, the elements in the vector may be values indicating the strength of the classification, e.g., values between 0 and 1. Rules may determine what is to happen when some behavior is detected. For example, the behavior 'washing of hands' may be deemed uninteresting, and instead a view of the operating theater is preferred, while a behavior 'suturing' may be regarded as interesting. A rule triggered by the latter may cause a region of interest showing the suturing to be stabilized.

A behavioral classifier may be configured to receive as input at least part of the one or more first video streams, e.g., one or more images, possibly scaled down, e.g., from different time moments. The images may be crop(s) of a video, or may be wide-angle view(s), and so on.

In an embodiment, classification may be with respect to a known workflow. For example, the system could make use of the workflow step that is being performed. For example, a different classifier may be applied in dependence on the current workflow step. In a smart operating theater, the current workflow step may be identified, e.g., by applying a further classifier, which may or may not be camera based, that identifies the current workflow step. The current workflow step may be used in the video processing system. For example, a different classifier may be applied based on the workflow step. For example, an operating neural network may be able to differentiate between different types of operating maneuvers; the operating neural network may only be applied though if an operation is actually ongoing according to the workflow step. Before the operation is ongoing, a different classifier may be used to identify a stream or to decide on whether or not to stabilize.

Figure 1a shows classification results 121-123. There may be more or fewer classification results. For example, classification result 121 may indicate that there is currently an active operation, e.g., in view of a video stream obtained from a body cam. For example, classification result 122 may indicate how many persons are detected in some wide-angle video stream; e.g., that there are 3 persons detected. For example, classification result 123 may indicate that currently no suturing is detected, or that currently excision is detected (e.g., the cutting out or removal of tissue), etc.

Detecting behaviors and/or objects of interest allows rules to make automated decisions regarding video processing operations that are to be performed. The latter may include: the switching between two feeds, e.g., a feed from a body-mounted camera, in case of a positive classification and a stream from a fixed camera in case of a negative classification; cropping, magnifying, perspective mapping, stabilizing, etc., of a video stream, etc. If no desired behavior and/or object is found, the second stream may be set to a fixed image, e.g., by freezing an image of a first video stream. Further examples are set out herein. In general, a cropping operation may reduce resolution. A cropping operation may be accompanied with a magnification operation, e.g., together with a smoothing or sharpening operation; and/or with a perspective mapping operation.

Decision unit 140 may be configured to have access to the output of classifier 120 and to apply one applicable video processing rule set to a classifier result. The video processing operation that is obtained in this way may then be applied to the first video stream(s) to obtain the second video stream.

As pointed out above, the video processing operation that may be applicable may be to switch to a video stream that shows a behavior and/or object for which the classifier is configured, or that shows the most of them. The video processing operation may also or instead modify the video instead of merely switching between them. Note that the system is also applicable if only a single video stream is available.

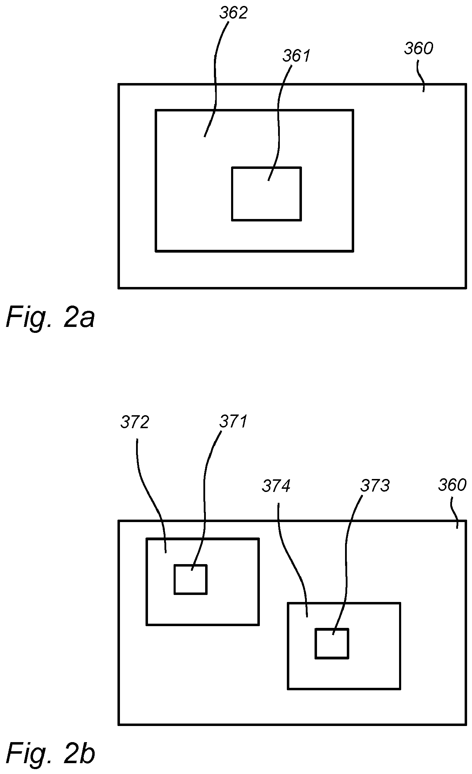

For example, a video processing operation which may be indicated by a rule may be a first video stabilization operation stabilizing a video stream. The stabilizing may reduce the high frequency motion that is caused by a body-mounted camera. For example, a video processing operation which may be indicated by a rule may be a cropping operation, e.g., that is configured for cropping a video stream on a region of interest. The region of interest may be fixed, e.g., the lower half of a video stream in case of an operation but may also be set by the classifier. For example, the classifier may indicate where the classifier detected the behavior and/or object. For example, both cropping and stabilizing may be performed. **Figure 2a** schematically shows an example of an embodiment of a video processing operation. Shown in figure 2a is a video stream 360. For example, a single still-image of the video stream is depicted in figure 2a. Shown is a cropping and stabilizing operation around a region of interest 361, resulting in a stabilized video stream 362. For example, the region of interest may be indicated by classifier 120. For example, it may be the region where the operation is being performed.

For example, the stabilizing may use a known stabilizer algorithm, e.g., to counter rotations and/or shifts of the camera. The stabilizer may also or instead stabilize by keeping one or more points in fixed positions, e.g., by adjusting the crop 362 so that the points remain in a fixed position with respect to crop 362. These points may be points indicated by the classifier, e.g., they may indicate the location of the behavior or object being classified. In an embodiment, a fiducial is included in a video stream which may be used to stabilize the image. For example, the fiducial may be applied to a surgical drape which is applied to a patient. For example, a fiducial may be printed on the surgical drape on a location near the operation, e.g., in view of one or more cameras.

For example, if the desired behavior and/or object is detected a rule may indicate to crop a first video stream on the detected behavior and/or object classified. However, if the classifier does not detect, e.g., gives a negative classification, a rule may indicate to crop the wide-angle video less than the first video processing rule. This has the effect that the video is focused when the desired interesting behavior is ongoing, but that the video is switched to a more wide-angle view, e.g., showing more of the surroundings when the operation is not ongoing. For example, a video processing operation is to follow the movement of a headset from which a first video stream originated. For example, if case of a particular classification, or the absence thereof, the system may cease stabilizing and/or cropping of a video stream and revert to showing what the specialist is looking at.

**Figure 2b** schematically shows an example of an embodiment of a first video processing operation and a second video processing operation. Shown in figure 2b is video stream 360. Interestingly, the part of video stream 360 that is used need not be constant. For example, video stream 360 may comprise a first region of interest 371 and a second region of interest 373. Two video processing operations may be defined with respect to them, e.g., to crop on them and/or to stabilize with respect to them, resulting in a first stabilized video stream 372 and a second stabilized video stream 374.

Which video stream is produced may depend on circumstances. For example, if a classifier detects an operation at region of interest 373, then a rule may indicate that a video stream 374 is generated, e.g., that focusses on the operation. On the other hand, if a conversation with another person, e.g., a colleague, then a rule may indicate to crop in on the colleague. Which of the two to give precedence if both are detected may be determined by rules. For example, the operation may be given preference, switching only to the conversation if the operation is paused. Switching between different regions of interest works well on wide-angle video, possibly in combination with perspective mapping algorithms that are applied to stream 362, 372, and/or 374.

Various other operations may be executed. For example, a video processing operation may map the perspective of a camera adjusting it for viewing. For example, in case a camera is configured for a wide-angle or fish-eye perspective, a perspective mapping algorithm may adjust the perspective. This may be combined with cropping. An example, of a perspective mapping algorithm is the plane perspective mapping algorithm.

After applying the video processing operating, the resulting second video stream may be transmitted to a viewer through the second video interface.

System 100 may comprise a rule interface configured to obtain a video processing rule set from a video processing rule database, e.g., a collection. The video processing rule may associate a video classification result with a video processing operation. Various examples of classification result and video processing operation are set out herein.

There may be multiple rules in a rule set. There are various strategies to deal with multiple rules. For example, the rules may be executed in order; the rules may be configured so that one applies, for example, the first applicable rule that applies but no others, etc. The rules may have a priority, so that in case multiple rules apply, the one with higher priority takes precedence.

The rules may be executed with some frequency, e.g., once every time unit. The time unit may be as second. There may be meta-rules that prevent opposing rules applying to quickly in succession. For example, consider the situation in which a first rule indicates to switch to a first stream, but a second rule indicates to switch to second stream. In this case, a meta rule may indicate that a time delay, say of 5 seconds, needs to pass before applying the opposing rule.

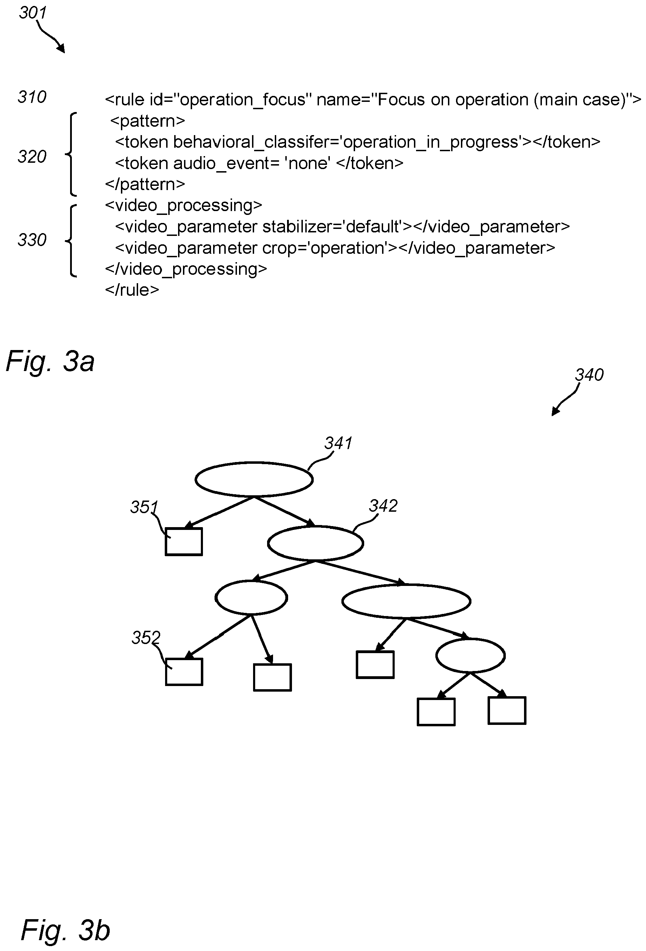

**Figure 3a** schematically shows an example of an embodiment of a video processing rule 301. In this case, the rule is expressed in XML

Shown in figure 301 is a preamble 310. Preamble 310 may give information such as an ID of the rule, or a human readable description. Preamble 310 may be used to determine which rules should be applied, e.g., for a particular viewer. Shown in figure 301 is a rule pattern 320. Rule pattern describes which combination of classification results are needed. In this example, a classifier result 'behavioral_classifer' should have the value 'operation_in_progress'. A second part of the rule pattern is that classifier result 'audio_event' should have the value 'none'. Together this may be understood that a behavioral classifier, e.g., a neural network has detected that an operation is ongoing. At the same time, no audio event, e.g., an alarm, a particular speech pattern, etc., has been detected.

Shown in rule 301 is a video processing operation. In this case, in the form of a set of parameters that represent the video processing operation. For example, in case rule pattern 320 is satisfied, the video processing operation described by video processing parameters 330 may be executed. In this case, video processing parameters 330 comprises two parameters: a video parameter 'stabilizer' has the value 'default', which may mean that a default stabilizer algorithm is applied. A video parameter 'crop' may have the value 'operation', which may mean that the video should be cropped on the operation.

Together this rule may have the effect that if an ongoing operation is detected, but no defined audio event is taking place, the video is stabilized and cropped on the operation. For example, another rule may specify that if a defined audio event takes place, or, say, no operation is detected, that the video is not cropped, or not cropped as much, e.g., showing a wide-angle view.

Multiple rules such as rule 301 may be combined in a rule set. The rule set may be expressed in a file, etc. Together the rules may express a decision tree, but this is not necessary. Although the example is given in XML, many other types of computer readable encoding are applicable. For example, instead of XML one may use ASN.1, Protocol buffers, proprietary encodings, and so on.

Rules may be combined in a decision tree. This may be implicit, or explicit. For example, an explicit decision tree may be encoded. **Figure 3b** schematically shows an example of an embodiment of a decision tree 340. In figure 3b, oval shapes represent an if-clause. Two if-clauses 341, 342 are provided with a reference numeral. Squares represent a video processing operation. Two such operations 351, 352 are provided with a reference numeral.

For example, the decision tree may first switch on the detected presence of some behavior, say, followed by some operation if it is absent, but followed by checking on exceptions if it is present. For example, an audio event may be such an exception. A decision tree may also be encoded in some computer readable representation, e.g., as above.

Interestingly, a rule database may comprise multiple video processing rules and/or multiple rule sets. The applicable video processing rule set may depend on various factors, e.g., the type of operation, the type of broadcast. Interestingly, the rule set may depend on the viewer of second video stream. For example, for most viewers a default rule set may provide a combination of cropping and wide-angle that is optimized for easy following of the action, e.g., operation. However, some user may prefer a more cropped version, or a rule set that reverts back to wide-angle less frequently. For example, a user ID may be associated with one or more rule IDs.

As indicated herein, a rule may link the result of a behavioral classifier, e.g., the presence or absence of some behavior, e.g., clauses 341, 342, but this is not necessary. For example, a rule may also or instead depend on other factors. For example, a video processing rule may depend on further information obtained with the first video stream. For example, the further information may comprise one or more of: audio, accelerator data, alarms generated by devices.

For example, if a particular device gives an alarm, then this may be a factor. For example, if a monitoring device gives an alarm, it may be indicated to switch to a wide-angle view, or a view of the device giving the alarm, etc. An alarm may be derived from sound in the video stream, but may also be obtained from another source, e.g., from the monitoring device. The audio may also be speech. For example, a particular speech pattern may be recognized by a speech recognition system.

Rules may distinguish between the actions, e.g., as classified, of different persons. For example, a rule may distinguish between the behavior of the person wearing the camera and the behavior of the one or more persons occurring in the video. For example, if a specialist with a body-worn camera turns his body and hence the camera away from the patient, then this may trigger a rule, but if the somebody else turns away from the patient it may not. Different rules may also be selected on the basis of the identity of the person performing a behavior. For example, a recognition system may identify the surgeon, e.g., from facial recognition or a tag, etc.; only for the surgeon are rules relevant that recognize operation behaviors. This can reduce false positives.

In an embodiment, system 100 may comprise a further video interface configured for receiving a further video stream 114. Video stream 114 may be obtained from a camera which is used specifically for obtaining classification results and which is not subject to video processing operations to obtain a second video stream. For example, Camera 214 may be a ceiling camera, e.g., a fish-eye camera. Camera 214 may not be suited for video viewing for any reason, e.g., because a top view of the scene is not informative, e.g., a view of a desired behavior, e.g., the operation, may be obstructed from camera 214. However, relevant information may nevertheless be obtained from camera 214. For example, a classifier may derive from video stream 214 how many people are present, or which people are present. For example, a rule may stop transmitting or skip to a freeze image, or the like, if not all people of an operation are present. For example, a rule may switch to a particular person, e.g., an anesthesiologist if the classifier derives from the video stream 114 that this person is currently active, but say a surgeon is not. At another time, a rule may switch to another person, e.g., the surgeon, if the classifier derives from the video stream 114 that this person is currently active, or most active. This classifier and video interface may be the same or different from interface 110 and classifier 120.

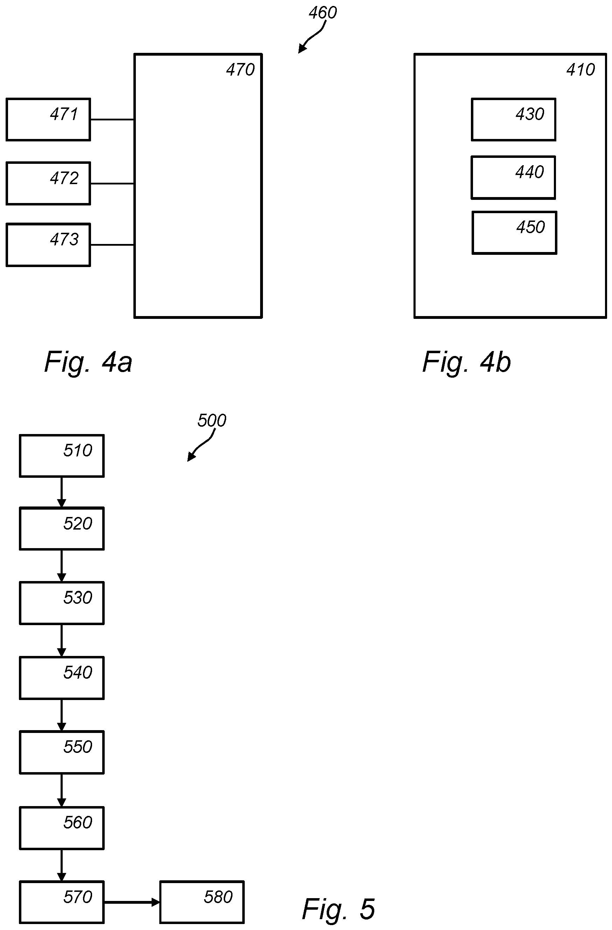

**Figure 4a** schematically shows an example of an embodiment of a video processing system 460. Video processing system 460 comprises a first video interface 471, a second video interface 472 and a rule interface 473. Video processing system 460 comprises a processor system 470 communicatively coupled to said interfaces. For example, processor system 470 may be configured to receive one or more video streams and one or more rules. Applying classification and processing according to the rule(s) may enable processor system 470 to obtain a second video stream for transmittal over second video interface 472. Processor system 470 may be embodied in various ways. For example, processor system 470 may comprise one or more microprocessors, memory and the like. Processor system 470 may be a distributed system or may be a single device.

**Figure 4b** schematically shows an example of an embodiment of a video processing device 410. Video processing device 410 may comprise a processor system 430, a memory 440, and a communication interface 450. Video processing device 410 may be configured to communicate with storage, e.g., a rule database. Storage may be a local storage of device 410, e.g., a local hard drive or memory. Storage may be non-local storage, e.g., cloud storage. In the latter case, storage may be implemented as a storage interface to the non-local storage.

Systems 410 may communicate with other devices, systems, cameras, monitoring devices, sensors, external storage, input devices, output devices, and/or one or more sensors, e.g., over a computer network. The computer network may be an internet, an intranet, a LAN, a WLAN, etc. The computer network may be the Internet. The systems comprise a connection interface which is arranged to communicate within the system or outside of the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The execution of device 410 may be implemented in a processor system, e.g., one or more processor circuits, e.g., microprocessors, examples of which are shown herein. Figure 1a shows functional units that may be functional units of the processor system 430. For example, figures 1a may be used as a blueprint of a possible functional organization of the processor system. For example, the functional units may be wholly or partially implemented in computer instructions that are stored at device 410, e.g., in an electronic memory of device 410, and are executable by a microprocessor of device 410. In hybrid embodiments, functional units are implemented partially in hardware, e.g., as coprocessors, e.g., neural network coprocessors, etc., and partially in software stored and executed on device 410.

In the various embodiments of a video processing system or device, the communication interfaces may be selected from various alternatives. For example, the interface may be a network interface to a local or wide area network, e.g., the Internet, a storage interface to an internal or external data storage, a keyboard, an application interface (API), etc. The systems 410 and 460 may have a user interface, which may include well-known elements such as one or more buttons, a keyboard, display, touch screen, etc. The user interface may be arranged for accommodating user interaction for configuring the systems, e.g., configuring rules, or applying the system to new video streams, etc.

Storage may be implemented as an electronic memory, say a flash memory, or magnetic memory, say hard disk or the like. Storage may comprise multiple discrete memories together making up storage. Storage may comprise a temporary memory, say a RAM. The storage may be cloud storage.

System 460 may be implemented in a single device. System 460 may be implemented in a single device, e.g., device 410. Typically, the system 460 and device 410 each comprise one or more microprocessors which execute appropriate software stored at the system or device; for example, that software may have been downloaded and/or stored in a corresponding memory, e.g., a volatile memory such as RAM or a non-volatile memory such as Flash. Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, systems 460 and device 410 may comprise circuits for the evaluation of neural networks.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

Below several further optional refinements, details, and embodiments are illustrated.

In some embodiments, a first video stream may be modified such that an unwanted effect of some behaviors which are disruptive for the video are compensated. For example, one may distinguish between disruptive, explorative and repetitive events.
- **Disruptive behavior** - For instance, a specialist is performing an operation but walks away to get a new piece of equipment or turns his head to look at someone who just entered the room. If this event has no interest for the student or remote co-worker, it is better to keep the patient in the field-of-view even if this would result in a temporary static stream, e.g., by switching to another camera or by freezing the image. The fact that the stream becomes static or the behavior that caused the freeze may be communicated to the viewer, e.g. as overlay text.
- **Explorative behavior** - For example, the specialist is moving his head around an object of interest, like the area where surgery is taking place to explore the anatomy. These movements may be distracting and confusing to the remote viewer; it would be better if the remote viewer could fixate the virtual camera position or at least partially stabilize the camera movements or move it at his own pace. In another example a technician could be walking in a factory and visually inspect the machines along an alley. This will be done with random head movements, which again might not be comfortable to follow for the remote viewer. In this case the remote viewer might want to control the camera movement himself to explore the surroundings. Furthermore, in this case the remote viewer could benefit from the wide angle of the camera to explore further than the direct viewer.
- **Repetitive behavior** - This behavior has similar consequences as the explorative behavior. For example, an operator is screwing a bolt and his body is moving in a repetitive fashion, or a surgeon is nodding to answer a question. It is beneficial to cancel this movement for the remote viewer.

In an embodiment, a classifier is configured to discriminate between interesting and non-interesting events, which may be application specific. For example, one may control the use of video stabilization in a video stream, e.g., the second video stream for a viewer person, based on the behavior of the person wearing one or more multiple cameras, e.g., the recorder person. For example, one may discriminate between interesting and non-interesting events that happen outside the area-of-interest of a video stream, so that the stream follows the recorder view only for interesting events. For example, in an embodiment, this may be done as follows:
- An area-of-interest is defined within a video stream
- The stream for the viewer is locked to the area-of-interest
- For a set of interesting recorder behaviors, the video stream will follow the recorder head movement. The interesting behavior may be characterized by, e.g.,
   ∘ a recorder head movement outside the area-of-interest that has a certain duration
   ∘ and/or a recorder head movement outside the area-of-interest that is uncorrelated with the recorder body movement
   ∘ and/or a recorder head movement that is correlated with a recorder voice description
   ∘ and/or an alarm outside the area of interest
   ∘ and/or an event outside the area of interest that involves tagged persons or objects.

For example, in an embodiment, the processor may be configured to define an area-of-interest within the one or more first video streams. For example, the area of interest may be the location where an operation takes place. A classifier may be configured to classify if the behavior is visible and switch between first video streams so that the operation remains in view. However, if the classifier (or a further classifier) classifies an interesting event, e.g., as defined in the system, the video may nevertheless switch to this view. Interesting events and region of interests may be defined in rules, e.g., by specifying which classifier result is linked to which video processing operation.

An area-of-interest may be defined within a wider camera view. For example, an area of interest may be, e.g.,
- surgical operation area
- (part of) patient body part
- 3D organ model
- (part of) electronic equipment
- (part of) home appliance
- (part of) furniture

The definition of the area of interest can be done by means known to people skilled in the art. For example, the recorder can give a voice or gesture command, or the area-of-interest can be defined by identifying in the video stream or by gaze tracking that the recorder is looking for a long amount of time at a specific object. A voice description of someone in the room, or a gesture of some in the room may also be used to define the area of interest. Said person may be wearing a camera or not.

The area-of-interest can change during the video stream. For example, in a basic mode video stabilization may be applied to the area-of-interest to compensate for head movements of the recorder. The 3D virtual camera position may be defined to be linked to an object of interest, to a classifier result, to a fiducial, etc. For example, as the recorder moves his/her head around or away from the object of interest, the motions may be compensated, and the virtual camera position is kept. The video stream remains directed towards the area-of-interest such that the viewer experience is not disrupted.

In an embodiment, the viewer may move the virtual camera position to explore beyond the area of interest, e.g., using an input device, e.g., using its own head-motion, e.g., via a virtual reality headset. In an embodiment, a desired camera position may be transmitted from the viewer to the video processing system. For example, meta data on camera view position may be transmitted towards the viewer, e.g., with the second video stream.

For example, for a set of interesting recorder behavior, e.g., as defined in the classifier, classifier parameters and/or video processing rules, the video stream may follow the recorder view, e.g., transmit the view from a body worn camera, even if the area of interest is not in its view. A wide variety of situations may be covered in this manner, some of which are described below
1 If the head movement away from the area-of-interest is longer than a predefined amount of time, e.g., 4 sec
   *Example*
   *the recorder checks quickly (1 sec) the heart rate on a monitor* > *stabilize*
   *the recorder looks carefully at irregular heart rate patterns (5 sec) on a monitor* > *follow view*
2 If the recorder hand or body movements are not correlated with the head movements
   *Example*
   *the recorder is screwing a bolt; his head shakes at the same frequency than the screwdriver* > *stabilize*
   *the recorder is making an incision in an organ; the scalpel is stable, but the head is moving to explore the incision angle* > *follow view*
3 The viewer describes by voice an element outside the area-of-interest (detected by speech analysis) and their head is moving outside the area-of-interest in a short time frame before or after this description, e.g., 5 sec.
   *Example*
   *the recorder looks at the ceiling briefly* > *stabilize*
   *the recorder looks at the ceiling briefly and makes a comment, e.g., 'this pipe is old, it has to be changed'* > *follow view*
4 If there is an alarm outside the area of interest, e.g., detected by IoT or video/sound analysis, or by measuring the physiological response of the recorder, e.g., increased skin conductance or heart rate or breathing rate, etc.
   *Example*
   *the recorder turns his head because the alarm on a monitor is starting* > *follow view*
   *someone in the room faints and falls on the floor* > *follow view*
   *the recorder turns his head because someone in the room talks loudly* > *follow view*
5 If the recorder engages discussion with a given person outside the area of interest, e.g., detected by video/sound analysis for a predefined set of persons with whom the discussion should be followed, e.g., recognized by voice analysis
   *Example*
   *the recorder asks a nurse to get new scalpels* > *stabilize*
   *the recorder discusses surgery with the anesthesiologist who entered the room* > *follow view*
6 If the recorder gets a new tool or piece or equipment, e.g., detected by video analysis for a predefined set equipment, e.g., recognized with video by markers
   *Example*
   *the recorder grabs a standard scalpel* > *stabilize*
   *the recorder grabs a specialized catheter marked with a marker* > *follow view*

In many cases, the detection whether the head movement is interesting may happen as the recorder is already looking away. Hence, if the event is interesting and the stream has to follow the recorder view, there may be a delay. Such a delay may be accommodated with a video buffer. This delay may also be ignored, or alternatively the delay can be compensated by accelerating the video stream between the time delay and a specified time frame.
*Example*
*the recorder turns his head, and the stream detects an interesting tagged tool within 2 seconds of this movement. At that time the stream follows the recorder view. The missed stream during the 2 sec delay can be displayed together with the next 2 sec of stream in acceleration, e.g., stream 0-4 sec between 2-4 sec.*

An operator, e.g., the viewer, the recorder, may decide which one of the above described recorder's behaviors are considered, e.g., in preset menus. For example, the system may be configured with a selection interface, e.g., presenting multiple options such as: time delays, tagged objects, persons, and/or behaviors.

For example, in an embodiment a recorder focused behavior is detected, e.g., by a classifier; for example, it may be detected that the recorder is performing a deliberate task in a limited view area, e.g., detected by video analysis or gaze tracking, e.g., fine surgery on a patient body part. In that case, not the entire field of view may be streamed, but a part that corresponds best to the region at which the person is looking, e.g., by zooming in. A zooming-in operation may also comprise a perspective mapping algorithm, for example, in case the first video stream is taken from a fish-eye camera.

In an embodiment, scripting may be done in real-time, e.g., via voice. For example, some phrases/commands of the recorder can determine which part of the total field-of-view is transmitted. For example, if the recorder says "focus", then that part of the scene may be tracked and transmitted, say, until the person says "unfocus".

In an embodiment the system may analyze the head and eye movements of the recorder within the wider camera view to identify multiple areas of interest. Multiple video streams of these areas may be presented to the viewer. For example, the system may be configured for the viewer to switch from one area to another.

In case movement of the recorder person are such that it cannot be compensated by selecting any available viewpoint or 3D camera position within the wider camera view, then the video may be frozen at the last frame, or another camera source, e.g., a fixed camera, may be used, e.g., showing the whole scene. Once conditions for streaming are met, the video may be switched back.

In an embodiment, a system may comprise one or more of the following optional features:
- Head movement tracking
- Body/hand movement tracking
- Physiological parameters tracking (skin conductance, Heartrate)
- Visual tracking of fixed marker, e.g., given object with pattern located near operating table,
- Gaze tracking
- Speech recognition and voice tracking

An embodiment may comprise three blocks, e.g., a Capture unit, Behavior analyzer and Selection unit. The Capture unit may be configured to record the situation using multiple cameras and may optionally also capture additional context signals and/or user behavior signals. These may include one or more of: head acceleration, gaze tracking, voice recognition, hand/body movements, object/people tracking, physiological body parameters and IoT events, etc. The Behavior analyzer may use these inputs to analyze the situation and generate metadata that annotates the video stream with events and contextual knowledge, describing what is happening. The Behavior analyzer may use predetermined definitions of what interesting and non-interesting events are in the various contexts and situations. This may include workflow procedure steps, body-head movement pattern rules, time threshold for acceptable viewing events outside an area of interest, etc. The Selection unit may determine what video is shown at the viewer side, e.g., using this behavioral metadata. For example, it may decide, say based on the analyzed metadata, e.g., to follow the video view of a body cam, or to stabilize the video.

The video processing system may be applied in many situations, e.g., remote streaming for expert consultation, help desk guidance, training, and in various fields, e.g.:
- medical (surgery, imaging, patient consultation, patient examination)
- scientific (lab experiments)
- industrial (machine maintenance, operation, refurbishment)
- home (apparatus and furniture maintenance, operation, refurbishment)
- agriculture (plant and animal care)

**Figure 5** schematically shows an example of an embodiment of a video processing method 500. Method 500 may be computer implemented and comprises
- receiving (510) one or more first video streams, and
- obtaining (520) a video processing rule set from a video processing rule database, a video processing rule associating a video classification result with a video processing operation,
- obtaining (530) the one or more first video streams through the first video interface,
- obtaining (540) an applicable video processing rule set through the rule interface,
- applying (550) a video classifier to a first video stream to obtain a classifier result,
- applying (560) the applicable video processing rule set to at least the classifier result to obtain a video processing operation,
- applying (570) the obtained video processing operation to the one or more first video streams to obtain the second video stream, and
- transmitting (580) the second video stream to a viewer.

Many different ways of executing the method are possible, as will be apparent to a person skilled in the art. For example, the order of the steps can be performed in the shown order, but the order of the steps can be varied, or some steps may be executed in parallel. Moreover, in between steps other method steps may be inserted. The inserted steps may represent refinements of the method such as described herein or may be unrelated to the method. For example, some steps may be executed, at least partially, in parallel. Moreover, a given step may not have finished completely before a next step is started.

Embodiments of the method may be executed using software, which comprises instructions for causing a processor system to perform method 500. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

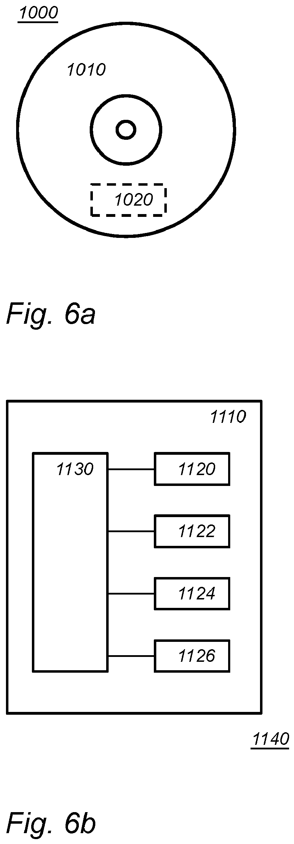

**Figure 6a** shows a computer readable medium 1000 having a writable part 1010 comprising a computer program 1020, the computer program 1020 comprising instructions for causing a processor system to perform a video processing method according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said video processing method.

**Figure 6b** shows in a schematic representation of a processor system 1140 according to an embodiment of a video processing method, device or system. The processor system comprises one or more integrated circuits 1110. The architecture of the one or more integrated circuits 1110 is schematically shown in Figure 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connector, respectively.

For example, in an embodiment, processor system 1140, e.g., the video processing system may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A video processing system, the system comprising
- a first video interface configured for receiving one or more first video streams, and
- a second video interface configured for transmitting a second video stream,
- a rule interface configured to obtain a video processing rule set from a video processing rule database, a video processing rule associating a video classification result with a video processing operation,
- a processor system configured for
- obtain the one or more first video streams through the first video interface,
- obtain an applicable video processing rule set through the rule interface,
- apply a video classifier to a first video stream to obtain a classifier result,
- apply the applicable video processing rule set to at least the classifier result to obtain a video processing operation,
- apply the obtained video processing operation to the one or more first video streams to obtain the second video stream,
- transmit the second video stream to a viewer through the second video interface.

2. A video processing system as in Claim 1, wherein at least one video processing rule associates a first video classification result with one of: a first video stabilization operation stabilizing a video stream, a first cropping operation cropping a video stream on a region of interest, a second video stabilization operation stabilizing and cropping a video stream on a region of interest.

3. A video processing system as in any one of the preceding claims, wherein the video classifier is a behavioral classifier configured to identify a behavior in the video stream.

4. A video processing system as in any one of the preceding claims, wherein the behavioral classifier is configured with an input for receiving at least part of the one or more first video streams, and an output indicating a detected behavior of multiple predefined behaviors.

5. A video processing system as in claim 4, wherein the classifier comprises a neural network.

6. A video processing system as in any one of the preceding claims, wherein the video processing rule database comprises multiple video processing rule sets, the applicable video processing rule set depending on the viewer of second video stream.

7. A video processing system as in any one of the preceding claims, wherein the processor system is configured to
- compute position tracking data from the first video stream, the first video stream being obtained from an augmented reality device
- generate an overlay image or video for an augmented reality device, the overlay image being aligned based on the position tracking data.

8. A video processing system as in any one of the preceding claims, wherein the first video stream is a wide-angle video stream,
- at least one video processing rule being configured to crop the wide-angle video stream to a first region of interest in the first video stream, and
- at least one video processing rule being configured to crop the wide-angle video stream to a second region of interest in the first video stream.

9. A video processing system as in any one of the preceding claims, wherein the first video stream is a wide-angle video stream,
- a first video processing rule being configured to crop the wide-angle video stream to a first region of interest in the first video stream in which a behavior is classified,
- a second video processing rule being configured to crop the wide-angle video less than the first video processing rule if the behavior is not classified.

10. A video processing system as in any one of the preceding claims, wherein the classifier is configured to detect a surgical operation being performed on a human or animal body.

11. A video processing system as in any one of the preceding claims, wherein one or more video processing rules depend on further information obtained with the first video stream, the further information comprising one or more of: audio, accelerator data, alarms generated by devices.

12. A video processing system as in any one of the preceding claims, wherein the rule set comprises a decision tree.

13. A video processing system as in any one of the preceding claims, comprising a further video interface configured for receiving a further video stream, wherein the processor system is configured to apply a further classifier to the further video stream to obtain a further video classification result, at least one rule associating the further video classification result with a video processing operation on the one or more first video streams.

14. A video processing system as in any one of the preceding claims, wherein the classifier detects the absence of an object of interest, an associated video processing operating switching to another of the one or more first video stream and/or freezing the image of a first video stream.

15. A video processing system as in any one of the preceding claims, wherein a video processing operation is to follow the movement of a headset from which a first video stream originated.

16. A video processing method (500), the method comprising
- receiving (510) one or more first video streams, and
- obtaining (520) a video processing rule set from a video processing rule database, a video processing rule associating a video classification result with a video processing operation,
- obtaining (530) the one or more first video streams through the first video interface,
- obtaining (540) an applicable video processing rule set through the rule interface,
- applying (550) a video classifier to a first video stream to obtain a classifier result,
- applying (560) the applicable video processing rule set to at least the classifier result to obtain a video processing operation,
- applying (570) the obtained video processing operation to the one or more first video streams to obtain the second video stream, and
- transmitting (580) the second video stream to a viewer.

17. A transitory or non-transitory computer readable medium (1000) comprising data (1020) representing instructions, which when executed by a processor system, cause the processor system to perform the method according to claim 16.
